# EUROPÄISCHE PATENTSCHRIFT

(11) **EP 0 604 477 B1**
(45) Veröffentlichungstag und Bekanntmachung des Hinweises auf die Patenterteilung: **03.09.1997**
(21) Anmeldenummer: 92918670.8
(22) Anmeldetag: 03.09.1992
(51) Int. Cl.: B24B 45/00

(54) **MOTORGETRIEBENE HANDWERKZEUGMASCHINE**
HAND-HELD POWER TOOL
OUTIL A MAIN ENTRAINE PAR MOTEUR

(30) Priorität: 21.09.1991 DE 4131514
(43) Veröffentlichungstag der Anmeldung: 06.07.1994
(73) Patentinhaber: ROBERT BOSCH GMBH, 70442 Stuttgart (DE)
(72) Erfinder: KIRN, Manfred, D-7000 Stuggart 80 (DE)
(86) Internationale Anmeldenummer: DE9200735
(87) Internationale Veröffentlichungsnummer: WO9305927

(56) Entgegenhaltungen:
- DE-A- 3 613 987
- DE-A- 3 844 617

## Beschreibung

### Stand der Technik

Die Erfindung geht aus von einer motorgetriebenen Handwerkzeugmaschine nach der Gattung des Anspruchs 1.

Durch die US-A 4,735,020 ist eine gattungsgemäße Handwerkzeugmaschine bekannt. Deren Arbeitsspindel kann mit einer Spindelstopeinrichtung arretiert bzw. gebremst und danach das Schraubmoment zum Lösen der Befestigungsmutter für das Schleifwerkzeug vom Antriebsmotor aufgebracht werden. Hierauf kann die Befestigungsmutter vollständig von Hand von der Arbeitsspindel gelöst werden.

Die bekannte Handwerkzeugmaschine hat den Nachteil, daß beim plötzlichen Anhalten der Arbeitsspindel nach Anstellen des Motors durch Betätigen der Spindelstopeinrichtung die Schleifscheibe infolge ihrer Trägheit dazu neigt, sich weiter zu drehen und dabei die Spannvorrichtung und sich selbst von der Arbeitsspindel zu lösen.

Dieses unbeabsichtigte Lösen der Spannvorrichtung kann dazu führen, daß die Schleifscheibe sich bei hoher Drehzahl von der Arbeitsspindel löst und infolge der ihr innenwohnenden hohen Energie den Bedienenden oder Umstehende gefährdet.

### Vorteile der Erfindung

Die erfindungsgemäße Handwerkzeugmachine mit den kennzeichnenden Merkmalen des Anspruchs 1 bzw. 4 hat demgegenüber den Vorteil, daß ein unbeabsichtigtes Lösen des scheibenförmigen Werkzeugs, insbesondere der Schleifscheibe, auch bei Betätigen der Spindelstopeinrichtung bei hoher Drehzahl der Arbeitsspindel verhindert wird. Dadurch wird ein großer Gewinn an Sicherheit erreicht.

Weitere vorteilhafte Ausgestaltungen der Erfindung ergeben sich aus den abhängigen Ansprüchen 2 und 3.

### Zeichnung

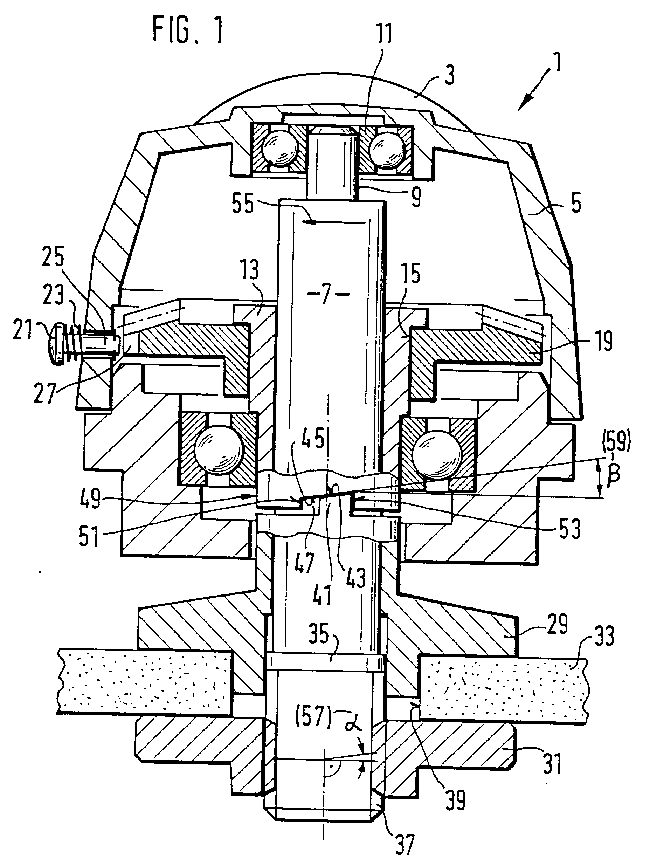

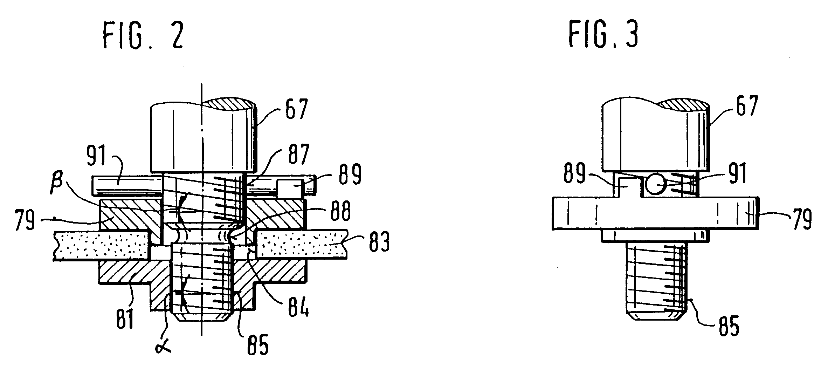

Ausführungsbeispiele der Erfindung sind in der nachfolgenden Beschreibung anhand der zugehörigen Zeichnung näher erläutert. Es zeigen Figur 1 eine Handwerkzeugmaschine mit einem ersten Ausführungsbeispiel der Erfindung, Figur 2 ein zweites Ausführungsbeispiel der Erfindung als Einzelheit und die Figur 3 das zweite Ausführungsbeispiel gemäß Figur 2 in einer weiteren Ansicht.

### Beschreibung der Ausführungsbeispiele

Der in Figur 1 in einer Schnittdarstellung von vorn gezeigte Winkelschleifer 1 besteht aus einem Motorgehäuse 3 und einem Getriebegehäuse 5. Im Getriebegehäuse 5 ist eine Arbeitsspindel 7 mit einem abgedrehten Bund 9 in einem Lager 11 gehalten. Axial daran anschließend ist auf die Arbeitsspindel 7 eine gestufte Hülse 13 aufgeschrumpft, die an ihrem oberen Ende einen Bund 15 trägt. Die gestufte Hülse 13 ist auf ihrer dem Bund 15 abgewandten Seite in einem weiteren Lager 17 drehbar, aber gegen Herausfallen gesichert, angeordnet.

Auf ihrem Bund 15 trägt die Hülse 13 drehfest ein Kegelzahnrad 19. Dem Kegelzahnrad 19 ist eine im Getriebegehäuse 5 angeordnete Spindelstop-Einrichtung 21 zugeordnet, die im wesentlichen aus einem gegen eine Feder 23 axial verschiebbar gelagerten Druckstift 25 besteht, der in Ausnehmungen 27 auf dem Außenumfang des Kegelzahnrades 19 einrasten kann. Mit dem Einrasten kann er das Kegelzahnrad 19 und damit die Arbeitsspindel 7 stoppen.

Auf dem freien Ende der Arbeitsspindel 7 ist zwischen einem Innenflansch 29 und einem Außenflansch 31 eine Schleifscheibe 33 gespannt. Der Innenflansch 29 sitzt mit seiner Bohrung sowohl begrenzt drehbar als auch auf der dem freien Ende abgewandten Seite der Arbeitsspindel 7 begrenzt bis zu einem Bund 35 axial verschiebbar. Der Außenflansch 31 sitzt auf einem Außengewinde 37, das einen Steigungswinkel aufweist, auf dem freien Ende der Arbeitsspindel 7. Die Schleifscheibe 33 hat eine zentrische Ausnehmung 39, mit der sie die Arbeitsspindel 7 mit Spiel übergreift. Der Innenflansch 29 trägt auf seiner der Schleifscheibe 33 abgewandten Seite einen zahnartigen Keilkörper 41 mit einer in Betrachtungsrichtung nach rechts unter einem Winkel ansteigenden, axialen Keilfläche 43, die sich an einer gleichsinnig ansteigenden axialen Gegenkeilfläche 45 einer etwa U-förmigen Ausnehmung 47 in der Stirnseite 49 der Hülse 13 abstützt. Die seitlichen Begrenzungswände 51, 53 der u-förmigen Ausnehmung 47 wirken als radiale Anschläge. Die U-förmige Ausnehmung 47 ist etwa doppelt so breit wie der Keilkörper 41. Bei einem Verdrehen des Innenflansches 29 gegenüber der Arbeitsspindel 7 wird dieser durch die Keilwirkung der aneinander aufgleitenden Keilflächen 43, 45 axial verschoben. Beim Verdrehen des Innenflansches 29 in Betrachtungsrichtung nach links wird daher der Spanndruck auf die Schleifscheibe 33 erhöht.
Die Drehrichtung der Arbeitsspindel 7 ist durch einen Pfeil 55 nach links weisend gekennzeichnet. Die Steigung 57 des Gewindes 37 unter dem Winkel ist kleiner als die Steigung 59 der Keilfläche 43 und der Gegenkeilfläche 45 unter dem Winkel .

Bei plötzlichem Abbremsen der Arbeitsspindel 7 hat die Schleifscheibe 33 infolge ihrer Massenträgheit die Neigung, sich in der ursprünglichen Richtung weiterzudrehen. Dabei sucht sie den Außenflansch 31 und den Innenflansch 29 auf der Arbeitsspindel 7 zu verdrehen. Da das Gewinde 37 ein Rechtsgewinde ist, bewirkt die nach links gerichtete Drehung der Schleifscheibe 33 ein Lösemoment an der Schraubverbindung zwischen dem Außenflansch 31 und der Arbeitsspindel 7. Dieses Lösemoment wird allerdings durch die axiale Verschiebung des Innenflansches 29 durch Aufgleiten der Keilfläche 43 auf der Gegenkeilfläche 45 zumindest ausgeglichen. Dazu ist die Breite der Ausnehmung 47 so bemessen, daß der Keilkörper 41 auch bei infolge der Massenträgheit der Schleifscheibe 33 extrem hohem Lösemoment nicht den radialen Anschlag 51 in der u-förmigen Ausnehmung 47 berührt, weil dadurch eine weitere axiale Verschiebung des Innenflansches 29 verhindert und damit ein unbeabsichtigtes Lösen der Schleifscheibe 33 möglich würde.

Beim Anschrauben des Außenflansches 31 zum Spannen der Schleifscheibe 33 wird durch deren Rechtsdrehung immer der geringst mögliche Abstand zwischen Innenflansch 29 und der Stirnseite 49 der Hülse 13 hergestellt, d.h. die Keilflächen 43, 45 stützen sich dabei aufeinander ab. Im Spannzustand wird sich der Keilkörper 41 also stets an die rechte Begrenzungswand 53 der U-förmigen Ausnehmung 47 anlegen. Dadurch ist gesichert, daß beim plötzlichen Betätigen der Spindelstopeinrichtung 21 noch genügend radiale Verdrehmöglichkeit für den Innenflansch 29 besteht, so daß dieser den Einspanndruck auf die Schleifscheibe 33 und damit auf den Außenflansch 31 erhöhen kann und in der Art einer Kontermutter die Schraubverbindung des Außenflansches 31 sichert.

Das in der Figur 2 schematisch dargestellte, weitere Ausführungsbeispiel der Erfindung zeigt eine Arbeitsspindel 67 auf der ein Innenflansch 79 und ein Außenflansch 81 aufgeschraubt sind, zwischen die eine Schleifscheibe 83 gespannt ist. Die Schleifscheibe 83 ist mit einer zentralen Ausnehmung 84 versehen, die die Arbeitsspindel 67 mit Spiel konzentrisch umgreift. Der Außenflansch 81 sitzt auf einem Außengewinde 85 geringer Steigung - Steigungswinkel - auf dem freien Ende der Arbeitsspindel 67. Der Innenflansch 79 sitzt auf einem Außengewinde 87 - Steigungswinkel - hoher Steigung der Arbeitsspindel 67, das durch einen Einstich 88 vom Außengewinde 85 getrennt ist.

Auf der der Schleifscheibe 83 abgewandten Seite des Innenflansches 79 ist ein zahnartig axial vorspringender Anschlag 89 angeordnet, der einen stangenartigen, durch die Arbeitsspindel 67 parallel zu dessen Durchmesser hindurchtretenden und in dieser festgehaltenen Anschlag 91 übergreift. Die Anschläge 89, 91 begrenzen damit die Verdrehmöglichkeit und zugleich die axiale Bewegung des inneren Flansches 87. Die Abstände der Anschläge 89, 91 sind so bemessen, daß auch bei infolge der Massenträgheit des Werkzeugs 83 extrem hohem Lösemoment das Weiterdrehen der Schleifscheibe 83 nicht zu einem aneinander Anliegen der Anschläge 89, 91 führt, weil dadurch eine weitere axiale Verschiebung des inneren Flansches 87 verhindert und damit ein unbeabsichtigtes Lösen der Schleifscheibe 83 möglich würde.

In Figur 3 ist das Ausführungsbeispiel der Figur 2 bei um die Achse der Arbeitsspindel um 90° verdrehter Stellung gezeigt um damit die Zuordnung des Innenflansches 79 und dessen Anschlags 89 zum Anschlag 91 zu verdeutlichen. Die Wirkungsweise des zweiten Ausführungsbeispiels stimmt grundsätzlich mit dem der Figur 1 überein. Der Unterschied besteht nur darin, daß das Gewinde 87 gemäß Figur 2 und 3 beim Verdrehen des Innenflansches 79, dessen axiale Verschiebung bewirkt, während das am Ausführungsbeispiel der Figur 1 durch Keilflächen bewirkt wird. Wird die Arbeitsspindel 67 schlagartig abgebremst, so sucht die Schleifscheibe 83 den Innenflansch 79 und den Außenflansch 81 auf der Arbeitsspindel 87 in Löserichtung des Außenflansches 81 zu verdrehen. Dadurch, daß dabei der Innenflansch 79 bei einer Verdehung axial schneller verschoben wird als der Außenflansch 81, erhöht sich der Einspanndruck auf die Schleifscheibe 83. Dadurch kann das Lösemoment am Außenflansch 81 nicht überschritten werden und die Schraubverbindung zwischen dem Außenflansch 81 und dem Gewinde 85 bleibt stabil. Ein unbeabsichtigtes Lösen dieser Verbindung ist auch unter extremen Bedingungen nicht möglich, so daß für diese Fälle eine Verletzungsgefahr des Bedienenden oder umstehender Personen auszuschließen ist. Damit ist auf einfache Weise eine Sicherheitseinrichtung für Handwerkzeugmaschinen mit scheibenförmigen Werkzeugen geschaffen.

Bei einem nicht dargestellten Ausführungsbeispiel der Erfindung ist der Innenflansch drehfest und axial unverschieblich auf der Arbeitsspindel befestigt. Der Außenflansch trägt eine an Keilflächen anlaufende, begrenzt drehbare Flanschscheibe, durch die der Einspanndruck auf die Schleifscheibe übertragen wird und die bei einer Verdrehung gegenüber dem Außenflansch ihren Abstand zu diesem ändert. Dadurch wird der Einspanndruck auf der Schleifscheibe von der Seite des Außenflansches beim Bremsen der Arbeitsspindel erhöht.

Wie bei der Lösung gemäß US-A 4,735,020 besteht auch bei allen anderen Schleifhandwerkzeugmaschinen mit von Hand spannbaren Spannmuttern die Gefahr, daß bei einer Ausgestaltung gemäß der Erfindung beim abrupten Spindelstop die Spannmutter derart festgeschraubt wird, daß sie nur noch mit einem Hilfswerkzeug lösbar ist. Es ist daher ein wichtiges Kriterium bei Anwendung der Erfindung, daß die axiale Verschiebung des Außen- oder Innenflansches begrenzt wird.

Die Gefahr eines zu hohen Spannmomentes bei abruptem Bremsen der Spindel bei Anwendung der Erfindung besteht nicht bei Verwendung einer Spannschraube gemäß DE-OS 37 05 638 bzw. DE-OS 38 41 181.

## Patentansprüche

1. Motorgetriebene Handwerkzeugmaschine, insbesondere Winkelschleifer (1), mit einer Spindelbremse (21) und mit einer Arbeitsspindel (7, 67), auf der ein scheibenförmiges Werkzeug (33, 83) mit einer die Arbeitsspindel (7, 67) mit Spiel übergreifenden, zentralen Bohrung (39, 84) zwischen einem Innenflansch (29, 79) und einem Außenflansch (31, 81) festgespannt ist, wobei der Außenflansch (31, 81) auf ein Befestigungsgewinde (37, 85) entgegen der Arbeitsdrehrichtung der Arbeitsspindel (7, 67) festschraubbar ist,
dadurch gekennzeichnet, daß beim Abbremsen der Arbeitsspindel (7 , 67) ohne eine von außen auf das Werkzeug (33, 83) eingeleitete Bremskraft, insbesondere mittels der Spindelbremse (21) bzw. durch die Wirkung des ausgeschalteten Motors, der Spanndruck auf das Werkzeug (33, 83) zwischen dem Innen- und dem Außenflansch (29, 31, 79, 81) selbsttätig erhöhbar ist, wobei das infolge der Trägheitskraft weiterrotierende Werkzeug (33, 83) den Spanndruck zwischen den Flanschen (29, 31, 79, 81) und dem Werkzeug (33, 83) erhöht, indem es als Stellmittel zum spannenden Verstellen des Innenflansches (29, 79) dient, und wobei sich eine Axialverschiebung des Innenflansches (29, 79) dadurch ergibt, daß dieser mit Keilmitteln (43, 45, 87) gekoppelt ist, die beim gemeinsamen Weiterrotieren in Arbeitsdrehrichtung mit dem Werkzeug (33, 83) von diesem durch axiales Anpressen oder formschlüssigen Eingriff mitgedreht werden, dabei aneinander aufgleiten und dabei dessen axialen Abstand zum Werkzeug (33, 83) bzw. zum Außenflansch (31, 81) zu verringern suchen.

2. Handwerkzeugmaschine nach Anspruch 1, dadurch gekennzeichnet, daß der Innenflansch (29, 79) auf steiler als das Befestigungsgewinde (37, 85), das den Anstiegswinkel hat, ansteigendem Gewinde (87) bzw. Keilflächen (43, 45), die den Anstiegswinkel haben, in gleicher Schraubrichtung wie der Außenflansch (31, 81) begrenzt drehbar ist.

3. Handwerkzeugmaschine nach Anspruch 2, dadurch gekennzeichnet, daß radiale Anschläge (51, 53, 89, 91) die Drehbarkeit des Innenflansches (29, 79) bezüglich der Arbeitsspindel (7, 67) begrenzen.

4. Motorgetriebene Handwerkzeugmaschine nach dem Oberbegriff des Anspruchs 1, dadurch gekennzeichnet, daß beim Abbremsen der Arbeitsspindel (7 , 67) ohne eine von außen auf das Werkzeug (33, 83) eingeleitete Bremskraft, insbesondere mittels der Spindelbremse (21) bzw. durch die Wirkung des ausgeschalteten Motors, der Spanndruck auf das Werkzeug (33, 83) zwischen dem Innen- und dem Außenflansch (29, 31, 79, 81) selbsttätig erhöhbar ist, wobei das infolge der Trägheitskraft weiterrotierende Werkzeug (33, 83) den Spanndruck zwischen den Flanschen (29, 31, 79, 81) und dem Werkzeug (33, 83) erhöht, indem es als Stellmittel zum spannenden Verstellen des Außenflansches (31, 81) dient, und wobei der Innenflansch (29, 79) bezüglich der Arbeitsspindel (7, 67) drehfest angeordnet ist und der Außenflansch (31, 81) dem Werkzeug (33, 83) zugewandte, axial verschiebbare Nocken trägt, deren axiale Verschiebung in Richtung des Werkzeugs (33, 83) mit Erreichen der Spannposition minimal ist und bei trägheitsbedingtem Rotieren des Werkzeugs (33, 83) relativ zur Arbeitsspindel (7, 57) durch Drehmitnahme ein Maximum erreicht.

## Claims

1. Motor-operated hand-held machine tool, in particular angle grinder (1), with a spindle brake (21) and with a working spindle (7, 67), on which a disc-shaped tool (33, 83) having a central bore (39, 84) engaging with play over the working spindle (7, 67) is firmly clamped between an inner flange (29, 79) and an outer flange (31, 81), the outer flange (31, 81) being capable of being firmly screwed onto a fastening thread (37, 85) counter to the working direction of rotation of the working spindle (7, 67), characterized in that, when the working spindle (7, 67) is braked without a braking force applied to the tool (33, 83) from outside, in particular by means of the spindle brake (21) or as a result of the effect of the switched-off motor, the clamping pressure on the tool (33, 83) between the inner and the outer flange (29, 31, 79, 81) can be increased automatically, the tool (33, 83), which continues to rotate as a result of the inertial force, increasing the clamping pressure between the flanges (29, 31, 79, 81) and the tool (33, 83) by serving as an adjusting means for the clamping adjustment of the inner flange (29, 79), and axial displacement of the inner flange (29, 79) occurring due to the fact that the latter is coupled to wedge means (43, 45, 87) which, continuing to rotate in the working direction of rotation together with the tool (33, 83), are co-rotated by the latter as a result of axial pressure or positive engagement, at the same time slide on one another and at the same time seek to reduce its axial distance from the tool (33, 83) or from the outer flange (31, 81).

2. Hand-held machine tool according to Claim 1, characterized in that the inner flange (29, 79) can be rotated to a limited extent in the same screwing direction as the outer flange (31, 81) on a thread (87), which ascends more steeply than the fastening thread (37, 85) having the angle of ascent α, or on wedge faces (43, 45) having the angle of ascent β.

3. Hand-held machine tool according to Claim 2, characterized in that radial stops (51, 53, 89, 91) limit the rotatability of the inner flange (29, 79) relative to the working spindle (7, 67).

4. Motor-operated hand-held machine tool according to the pre-characterizing clause of Claim 1, characterized in that, when the working spindle (7, 67) is braked without a braking force applied to the tool (33, 83) from outside, in particular by means of the spindle brake (21) or as a result of the effect of the switched-off motor, the clamping pressure on the tool (33, 83) between the inner and the outer flange (29, 31, 79, 81) can be increased automatically, the tool (33, 83), which continues to rotate as a result of the inertial force, increasing the clamping pressure between the flanges (29, 31, 79, 81) and the tool (33, 83) by serving as an adjusting means for the clamping adjustment of the outer flange (31, 81), and the inner flange (29, 79) being arranged fixedly in terms of rotation relative to the working spindle (7, 67), and the outer flange (31, 81) carrying axially displaceable cams which face the tool (33, 83) and of which the axial displacement in the direction of the tool (33, 83) is at a minimum when the clamping position is reached and, in the case of inertia-induced rotation of the tool (33, 83) relative to the working spindle (7, 57), reaches a maximum as a result of rotational take-off.

## Revendications

1. Outil à main entraîné par un moteur, en particulier meuleuse d'angle(1), avec un frein de broche (21) et une broche de travail (7, 67) sur laquelle est serré un outil (33, 83) ayant la forme d'un disque avec un alésage central (39, 84), qui vient en prise, avec du jeu, sur la broche de travail (7, 67), entre un flasque intérieur (29, 79) et un flasque extérieur (31, 81), le flasque extérieur (31, 81) pouvant être vissé à bloc sur un filetage de fixation (37, 85) en sens opposé du sens de rotation de travail de la broche de travail (7, 67),
caractérisé en ce que
lors du freinage de la broche de travail (7, 67) sans qu'une force de freinage soit introduite de l'extérieur sur l'outil (33, 83), en particulier au moyen du frein de broche (21) ou sous l'action du moteur débranché, la pression de serrage sur l'outil (33, 83) entre le flasque intérieur et le flasque extérieur (29, 31, 79, 81) peut être automatiquement accrue alors que l'outil (33, 83), qui continue de tourner par suite des forces d'inertie, accroît la pression de serrage entre les flasques (29, 31, 79, 81) et l'outil (33, 83), en servant de moyen de réglage pour déplacer le flasque intérieur (29, 79) à serrer, et un déplacement axial du flasque intérieur (29, 79) résultant du fait que celui-ci est accouplé par des moyens en forme de coins(43, 45, 87) qui, lorsqu'ils continuent de tourner dans le sens de rotation de travail en même temps que l'outil (33, 83), sont entraînés en rotation par celui-ci par la compression axiale ou la venue en prise par engagement par la forme et, ce faisant, glissent les uns sur les autres et cherchent à réduire leur distance axiale par rapport à l'outil (33, 83) ou par rapport au flasque extérieur (31, 81).

2. Outil à main selon la revendication 1,
caractérisé en ce que
le flasque intérieur (29, 79) peut tourner de façon limitée dans le même sens de vissage que le flasque extérieur (31, 81) sur un filetage croissant (87) ou sur des surfaces en forme de coin (43, 45) qui ont l'angle de croissance, ce filetage étant plus raide que le filetage de fixation (31, 81) qui a l'angle de croissance.

3. Outil à main selon la revendication 2,
caractérisé en ce que
des butées radiales (51, 53, 89, 91) limitent les possibilités du flasque intérieur (29, 79) de tourner par rapport à la broche de travail (7, 67).

4. Outil à main entraîné par un moteur, selon le préambule de la revendication 1,
caractérisé en ce que
lors du freinage de la broche de travail (7, 67) sans le concours d'une force de freinage introduite de l'extérieur sur l'outil (33, 83), en particulier au moyen du frein de broche (21) ou sous l'action du moteur débranché, la pression de freinage sur l'outil (33, 83) entre le flasque intérieur et le flasque extérieur (29, 31, 79, 81) peut s'accroître automatiquement, l'outil (33, 83), qui continue de tourner par suite des forces d'inertie, accroissant la pression de serrage entre les flasques (29, 31, 79, 81) et l'outil (33, 83), en servant de moyen de réglage pour déplacer le flasque extérieur à serrer (31, 81), et le flasque intérieur (29, 79) étant disposé de façon solidaire en rotation par rapport à la broche de travail (7, 67) tandis que le flasque extérieur (31, 81) porte des cames qui peuvent coulisser axialement, tournées vers l'outil (33, 83), cames dont le déplacement axial dans le sens de l'outil (33, 83) est minimal en atteignant la position de serrage et, lors de la rotation de l'outil (33, 83) par rapport à la broche de travail (7, 57) du fait de l'inertie, atteint un maximum par entraînement en rotation.
